(19) Europäisches Patentamt
European Patent Office
Office européen des brevets

(11) **EP 3 158 259 B1**

(12) **EUROPÄISCHE PATENTSCHRIFT**

(45) Veröffentlichungstag und Bekanntmachung des Hinweises auf die Patenterteilung:
**11.10.2017   Patentblatt 2017/41**

(21) Anmeldenummer: **15737955.3**

(22) Anmeldetag: **22.06.2015**

(51) Int Cl.:
***F21S 8/10*** *(2006.01)*

(86) Internationale Anmeldenummer:
**PCT/AT2015/050153**

(87) Internationale Veröffentlichungsnummer:
**WO 2015/196223 (30.12.2015 Gazette 2015/52)**

(54) **VERFAHREN UND SCHEINWERFER ZUM ERZEUGEN EINER LICHTVERTEILUNG AUF EINER FAHRBAHN**

METHOD AND HEADLIGHT FOR GENERATING A LIGHT DISTRIBUTION ON A ROADWAY

PROCÉDÉ ET PROJECTEUR POUR PRODUIRE UNE RÉPARTITION DE LA LUMIÈRE SUR UNE CHAUSSÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2014   AT 504352014**

(43) Veröffentlichungstag der Anmeldung:
**26.04.2017   Patentblatt 2017/17**

(73) Patentinhaber: **ZKW Group GmbH**
**3250 Wieselburg (AT)**

(72) Erfinder:
• **WINTERER, Nina**
  **3033 Altlengbach (AT)**
• **REISINGER, Bettina**
  **3300 Amstetten (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
WO-A1-2014/024385     WO-A1-2014/085896
DE-A1-102012 008 833     DE-A1-102012 100 141
JP-A- 2013 026 094

**EP 3 158 259 B1**

**Beschreibung**

Die Erfindung bezieht sich auf ein Verfahren zum Erzeugen einer Lichtverteilung auf einer Fahrbahn mit Hilfe eines KFZ-Scheinwerfers, bei welchem zumindest ein in seiner Intensität modulierbarer Laserstrahl mit Hilfe zumindest eines angesteuerten Strahlablenkmittels in zumindest einer Koordinatenrichtung scannend auf ein Lichtkonversionsmittel gelenkt wird, um an diesem ein Leuchtbild zu erzeugen, das mit Hilfe einer Projektionsoptik auf die Fahrbahn projiziert wird.

Ebenso bezieht sich die Erfindung auf einen Scheinwerfer für Kraftfahrzeuge mit zumindest einer, mittels einer Ansteuerung und einer Recheneinheit modulierbaren Laserlichtquelle, deren Laserstrahl über ein von einer Strahlablenkansteuerung angesteuertes Strahlablenkmittel auf zumindest ein Lichtkonversionsmittel gelenkt wird, welches ein Phosphormaterial zur Lichtkonversion aufweist, und mit einem Projektionssystem zur Projektion des an dem zumindest einem Lichtkonversionsmittel erzeugten Leuchtbildes auf die Fahrbahn.

Der Einsatz von Laserlichtquellen in Kraftfahrzeugen gewinnt derzeit an Bedeutung, da Laserdioden flexiblere und effizientere Lösungen ermöglichen, wodurch neben neuen Möglichkeiten der Funktionalität auch die Leuchtdichte des Lichtbündels sowie die Lichtausbeute des Scheinwerfers erheblich gesteigert werden können. DE 10 2012 100 141 A1 beschreibt einen gattungsgemäßen Scheinwerfer. Bei den bekannten Lösungen wird allerdings kein direkter Laserstrahl emittiert, um eine Gefährdung von Menschen und anderen Lebewesen durch den extrem gebündelten Lichtstrahl hoher Leistung zu vermeiden. Der Laserstrahl wird vielmehr auf einen zwischengeschalteten Konverter, der ein Lumineszenzkonversionsmaterial, kurz "Phosphor" genannt, enthält, geleitet und von diesem Lichtkonversionsmittel von z.B. blauem Licht in vorzugsweise "weißes" Licht umgewandelt, insbesondere so, dass in Überlagerung mit der gestreuten Laserstrahlung ein gesetzeskonformer Weißlichteindruck entsteht

Aus der EP 2 063 170 A2 ist ein Scheinwerfer für Kraftfahrzeuge der eingangs genannten Art bekannt geworden, bei welchem zur Ausleuchtung der Fahrbahn mit einem blendfreien adaptiven Fernlicht bestimmte Bereiche in Abhängigkeit von anderen Verkehrsteilnehmern bzw. in Abhängigkeit von Umgebungsparametern, wie Eigengeschwindigkeit; Stadt/Freiland/Autobahn, Wetter, Dämmerung etc. ausgespart werden können. Der Strahl eines Lasers wird über einen in zwei Raumrichtungen bewegbaren Mikrospiegel auf eine Leuchtfläche gelenkt, die zur Konvertierung des Laserlichtes in vorzugsweise weißes Licht einen Phosphor enthält. Mittels einer Linse wird das Leuchtbild der Leuchtfläche auf die Fahrbahn projiziert.

Bei der Abbildung dieses Lichtbilds durch die Projektionslinse oder eine andere Projektionsoptik kommt es zu Linsenfehlern, unter anderem zudem sogenannten "natürlichen Randlichtabfall" und zur "Vignettierung".

Der natürliche Randlichtabfall wird durch das $\cos^4(\alpha)$-Gesetz beschrieben, welches besagt, dass die Bildhelligkeit zum Rand hin um einen Faktor $\cos^4(\alpha)$ dunkler wird ($\alpha$ ist der Winkel des Strahlenbündels zur optischen Achse).

Bei der Vignettierung kommt es zur Abschattung von Strahlen, die aus dem Randbereich des Leuchtbildes des Lichtkonversionsmittels kommen, wodurch die Bildhelligkeit am Rand geringer ist als in der Mitte. Wie groß der Helligkeitsverlust ist, hängt von den verwendeten Geometrien, nämlich dem Durchmesser der Aperturblende des Linsensystems und/oder der Numerischen Apertur und vor allem auch von der Abstrahlcharakteristik des Lichtkonversionsmittels ab.

Im Rahmen dieser Beschreibung der Erfindung soll jedoch unter dem Begriff "Randlichtabfall" jeder Intensitätsabfall des Lichtes zum Rande eines Bildes, unabhängig von der physikalischen Art seiner Entstehung verstanden werden. Die oben genannten Unterscheidungen der Theorie zwischen einem "natürlichen Randlichtabfall" und einer Verdunklung auf Grund der Vignettierung sind in der Praxis und auch im vorliegenden Fall nicht von erheblicher Bedeutung.

Die DE 102009025678A1 beschreibt eine scannende Spiegelvorrichtung und eine Steuerung zum Dimmen einer LED-oder Laser-Lichtquelle zur Erzeugung eines Leuchtdichtemusters. Die Halbleiterlichtquelle wird ausschließlich über eine EIN/AUS-Schaltung entlang den Hin- und Her-Bewegungsrouten des Spiegels angesteuert. Somit wird zwar eine grundlegende Steuerungsmöglichkeit offenbart, aber eine variable Steuerung der Lichtintensität in Abhängigkeit von der Position der scannenden Spiegelvorrichtung zur Korrektur von Abbildungsfehlern ist nicht geoffenbart.

Eine Aufgabe der Erfindung besteht nun darin, ein Verfahren zu schaffen, welches ein vollständiges oder zumindest weitgehendes Ausgleichen des Randlichtabfalls ermöglicht. Ebenso soll ein Scheinwerfer geschaffen werden, bei welchem dieser Randlichtabfall zumindest weitgehend kompensiert ist.

Diese Aufgabe wird mit einem Verfahren nach Anspruch 1 gelöst. Bei einer vorteilhaften Variante ist vorgesehen, dass die Intensität des zumindest einen Laserstrahls mit koordinatenabhängigen Korrekturfaktoren multipliziert wird.

Hierbei kann es auch zweckmäßig sein, wenn zur Korrektur des Randlichtabfalls gemäß dem $\cos^4\alpha$-Gesetz die Intensität des zumindest einen Laserstrahls mit dem Kehrwert eines Korrekturfaktors $\delta(x, y)$ multipliziert wird, wobei

$$\delta(x, y) = \cos^4(\alpha) = \left(\frac{g^2}{x^2 + y^2 + g^2}\right)^2,$$ mit x(t) = A.sin($\omega_x$t) und y(t) = B.sin($\omega_y$t), g optischer Abstand zwischen Phosphor und Projektionsoptik, A, B Amplituden der Spiegelschwingungen und $\omega_x$, $\omega_y$ deren Frequenzen in den Koordinatenrichtungen x, y.

Andererseits kann es auch von Vorteil sein, wenn zur Korrektur des Randlichtabfalls auf Grund der Vignettierung ein Korrekturfaktor $\varepsilon(x,y) = \sin^2(\theta_0/2)/\sin^2(\theta(x,y)/2)$ verwendet wird, mit Punktkoordinaten (x,y) in Relation zur optischen Achse.

Bei zweckdienlichen Varianten kann vorgesehen sein, dass die Intensitätsänderung zur Korrektur des Randlichtabfalls zumindest in horizontaler Richtung x durchgeführt wird.

Bei einer weiteren empfehlenswerten Variante ist vorgesehen, dass das Strahlablenkmittel zumindest einen, um zumindest ein Achse verschwenkbaren Mikrospiegel aufweist und eine den zumindest einen Lichtstrahl erzeugende Laserlichtquelle in Abhängigkeit von der Winkellage des zumindest einen Mikrospiegels moduliert wird.

In diesem Fall ist es zweckmäßig, wenn der Mikrospiegel mit einer Frequenz entsprechend einer mechanischen Eigenfrequenz in der jeweiligen Koordinatenrichtung angesteuert wird.

Die gestellte Aufgabe wird auch mit einem Scheinwerfer nach Anspruch 8 gelöst. Dabei kann es von Vorteil sein, wenn die Recheneinheit über die Ansteuerung zur Multiplikation des Ansteuerstroms und damit der Laserstrahlintensität mit koordinatenabhängigen Korrekturfaktoren eingerichtet ist.

Des Weiteren ist es zweckmäßig, falls zur Korrektur des Randlichtabfalls gemäß dem $\cos^4\alpha$-Gesetz die Recheneinheit dazu eingerichtet ist, die Intensität des zumindest einen Laserstrahls mit dem Kehrwert eines Korrekturfaktors $\delta(x, y)$ zu multiplizieren, wobei $\delta(x, y) = \cos^4(\alpha) = \left(\frac{g^2}{x^2 + y^2 + g^2}\right)^2$, mit $x(t) = A.\sin(\omega_x t)$ und $y(t) = B.\sin(\omega_y t)$, g optischer Abstand zwischen Phosphor und Projektionsoptik, A, B Amplituden der Spiegelschwingungen und $\omega_x$, $\omega_y$ deren Frequenzen in den Koordinatenrichtungen x, y.

Andererseits kann mit Vorteil vorgesehen sein, dass zur Korrektur des Randlichtabfalls auf Grund der Vignettierung die Recheneinheit dazu eingerichtet ist, die Intensität des zumindest einen Laserstrahls mit einem Korrekturfaktor $\varepsilon(x,y) = \sin^2(\theta_0/2)/\sin^2(\theta(x,y)/2)$ zu multiplizieren, mit Punktkoordinaten (x,y) in Relation zur optischen Achse.

Bei einer zweckmäßigen Variante kann man vorsehen, dass das Strahlablenkmittel zumindest einen, um eine Achse verschwenkbaren Mikrospiegel aufweist, der Recheneinheit ein Positionssignal betreffend die Winkellage des Spiegels zugeführt ist um die den zumindest einen Lichtstrahl erzeugende Laserlichtquelle in Abhängigkeit von der Winkellage des zumindest einen Mikrospiegels zu modulieren.

Dabei ist es empfehlenswert, wenn die Strahlablenkansteuerung zur Abgabe zumindest eines Treibersignals an den zumindest einen Mikrospiegel ausgebildet ist, dessen Frequenz der mechanischen Eigenfrequenz des Mikrospiegels in der entsprechenden Koordinatenrichtung entspricht.

Die Erfindung samt weiteren Vorteilen ist im Folgenden an Hand beispielsweiser Ausführungsformen näher erläutert, die in der Zeichnung veranschaulicht sind. In dieser zeigt

Fig. 1 die für die Erfindung wesentlichen Komponenten eines Scheinwerfers und deren Zusammenhang in einer schematischen Darstellung,

Fig. 2a, 2b und 2c schematisch den Strahlenverlauf und die Randstrahlen bei der Projektion eines auf einem Phosphor erzeugten Leuchtbildes und

Fig. 3 schematisch, ähnlich Fig. 1, einen beispielsweisen Abtastweg über den Phosphor eines Lichtkonversionsmittels.

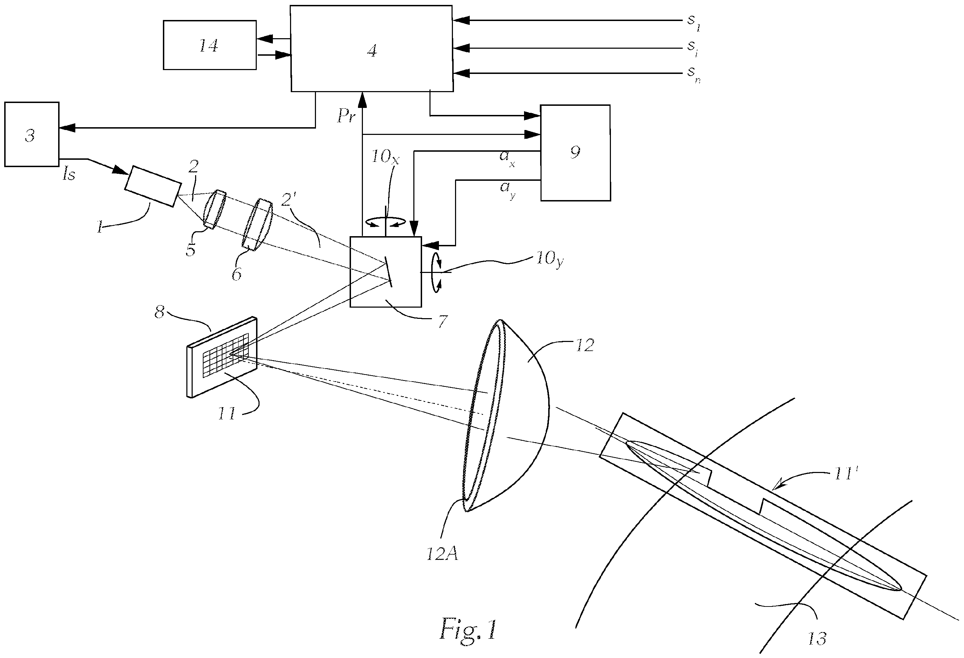

Unter Bezugnahme auf Fig. 1 wird nun ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers ist eine Laserlichtquelle 1, die einen Laserstrahl 2 abgibt, und welcher eine Laseransteuerung 3 zugeordnet ist, wobei diese Ansteuerung 3 zur Stromversorgung sowie zur Überwachung der Laseremission oder z.B. zur Temperaturkontrolle dient und auch zum Modulieren der Intensität des abgestrahlten Laserstrahls eingerichtet ist. Unter "Modulieren" wird in Zusammenhang mit der vorliegenden Erfindung verstanden, dass die Intensität der Laserlichtquelle geändert werden kann, sei es kontinuierlich oder gepulst, im Sinne eines Ein- und Ausschaltens.

Wesentlich ist, dass die Lichtleistung analog dynamisch geändert werden kann, je nachdem, an welcher Winkelposition ein später näher beschriebener Spiegel steht. Zusätzlich gibt es noch die Möglichkeit des Ein- und Ausschaltens für eine gewisse Zeit, um definierte Stellen nicht zu beleuchten oder auszublenden. Ein Beispiel eines dynamischen Ansteuerungskonzepts zur Erzeugung eines Bildes durch einen scannenden Laserstrahl ist etwa in der österreichischen Druckschrift AT514633 A1 beschrieben.

Die Laserlichtquelle enthält in der Praxis oft mehrere Laserdioden, beispielsweise sechs von z.B. je 1 Watt, um die gewünschte Leistung bzw. den geforderten Lichtstrom zu erreichen. Der Ansteuerstrom der Laserlichtquelle 1 ist mit $I_s$ bezeichnet.

Die Laseransteuerung 3 erhält ihrerseits wiederum Signale von einer zentralen Recheneinheit 4, welcher Sensorsignale $s_1 ... s_i ... s_n$ zugeführt werden können. Diese Signale können einerseits beispielsweise Schaltbefehle zum Umschalten von Fernlicht auf Abblendlicht sein oder andererseits Signale, die beispielsweise von Sensoren $S_1...S_n$, wie Kameras, aufgenommen werden, welche die Beleuchtungsverhältnisse, Umweltbedingungen und/oder Objekte auf der Fahrbahn erfassen. Auch können die Signale von einer Fahrzeug-Fahrzeug-Kommunikationsinformation stammen.

Die Laserlichtquelle 1 gibt beispielsweise blaues oder UV-Licht ab, wobei der Laserlichtquelle eine Kollimatoroptik 5 sowie eine Fokussieroptik 6 nachgeordnet ist. Die Ausbildung der Optik hängt unter anderem von der Art, Anzahl und der räumlichen Platzierung der verwendeten Laserdioden, von der erforderlichen Strahlqualität und von der gewünschten Laserspotgröße am Lichtkonversionsmittel ab.

Der fokussierte bzw. geformte Laserstrahl 2' trifft auf einen Mikrospiegel 7 und wird auf ein im vorliegenden Beispiel als Leuchtfläche ausgebildetes Lichtkonversionsmittel 8 reflektiert, welches z.B. in bekannter Weise einen Phosphor zur Lichtkonversion aufweist. Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist.

Man verwendet Lumineszenz-Farbstoffe, wobei die Ausgangswellenlänge im Allgemeinen kürzer und damit energiereicher als das emittierte Wellenlängengemisch ist. Der gewünschte Weißlichteindruck entsteht dabei durch additive Farbmischung. Dabei wird unter "weißes Licht" Licht einer solchen

Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionsmittel kommen beispielsweise Optokeramiken in Frage, das sind transparente Keramiken, wie beispielsweise YAG:Ce (ein Yttrium-Aluminium-Granat mit Cer dotiert).

Angemerkt sei an dieser Stelle, dass in der Zeichnung das Lichtkonversionsmittel als Phosphorfläche gezeigt ist, auf welcher der scannende Laserstrahl bzw. scannende Laserstrahlen ein Bild erzeugen, das von dieser Seite des Phosphors ausgehend projiziert wird. Es ist jedoch auch möglich, einen durchscheinenden Phosphor zu verwenden, bei welchem der Laserstrahl, von der der Projektionslinse abgewandten Seite kommend, ein Bild erzeugt, wobei sich jedoch die Abstrahlseite auf der der Projektionslinse zugewandten Seite des Lichtkonversionsmittels befindet. Es sind somit sowohl reflektierende als auch transmissive Strahlengänge möglich, wobei letztlich auch eine Mischung von reflektierenden und transmissiven Strahlengängen nicht ausgeschlossen ist.

Der im vorliegenden Beispiel um zwei Achsen schwingende Mikrospiegel 7 wird von einer Spiegelansteuerung 9 mit Hilfe von Treibersignalen $a_x$, $a_y$ angesteuert und z.B. in zwei zueinander orthogonalen Richtungen x, y in Schwingungen konstanter, in vielen Fällen jedoch in x-Richtung und y-Richtung unterschiedlicher Frequenz versetzt, wobei diese Schwingungen insbesondere den mechanischen Eigenfrequenzen des Mikrospiegels in den jeweiligen Achsen entsprechen können. Bei elektrostatisch arbeitenden Mikrospiegeln sind relativ hohe Treiberspannungen in der Größenordnung von 150 Volt erforderlich. Auch die Ablenkansteuerung 9 wird von der Recheneinheit 4 gesteuert, um die Schwingungsamplituden des Mikrospiegels 7 einstellen zu können, wobei auch asymmetrisches Schwingen um die jeweilige Achse einstellbar sein kann. Die Ansteuerung von Mikrospiegeln ist bekannt und kann auf vielerlei Art erfolgen, z.B. elektrostatisch oder elektrodynamisch. Bei erprobten Ausführungsformen der Erfindung schwingt der Mikrospiegel 7 beispielsweise mit einer Frequenz von 20 kHz in x-Richtung um eine erste Schwingungsachse 10x und von 400 Hz in y-Richtung um eine zweite Schwingungsachse 10y und sein maximaler Ausschlag führt in Abhängigkeit von seiner Ansteuerung zu Auslenkungen in dem resultierenden Leuchtbild von beispielsweise +/- 35° in x-Richtung und -12° bis +6° in y-Richtung, wobei die Spiegelauslenkungen die Hälften dieser Werte betragen. Es sind auch Ausführungen möglich, bei welchen die Schwingungsfrequenzen in beiden Koordinatenrichtungen gleich sind.

Die Position des Mikrospiegels 7 wird zweckmäßigerweise mit Hilfe eines Positionssignals $p_r$ an die Ablenkansteuerung 9 und/oder an die Recheneinheit 4 rückgemeldet. Es sei angemerkt, dass auch andere Strahlablenkmittel, wie z.B. bewegbare Prismen, Verwendung finden können, wenngleich die Verwendung eines Mikrospiegels bevorzugt wird.

Der Laserstrahl 6 scannt somit über das Lichtkonversionsmittel 8, das im Allgemeinen eben ist, jedoch nicht eben sein muss, ein Leuchtbild 11 mit einer vorgegebenen Lichtverteilung. Dieses Leuchtbild 11 wird nun mit einem Projektionssystem 12 als Leuchtbild 11' auf die Fahrbahn 13 projiziert. Dabei wird die Laserlichtquelle mit hoher Frequenz gepulst oder kontinuierlich angesteuert, sodass entsprechend der Position des Mikrospiegels beliebige Lichtverteilungen nicht nur einstellbar sind - beispielsweise Fernlicht/Abblendlicht - sondern auch rasch änderbar sind, wenn dies eine besondere Gelände- oder Fahrbahnsituation erfordert, beispielsweise wenn Fußgänger oder entgegenkommende Fahrzeuge durch einen oder mehrere der Sensoren $S_1...S_n$ erfasst werden und dementsprechend eine Änderung der Geometrie und/oder Intensität des Leuchtbildes 11' der Fahrbahnausleuchtung erwünscht ist. Das Projektionssystem 12 ist hier vereinfacht als Linse dargestellt, wobei eine begrenzende Apertur mit 12A bezeichnet ist, welche beispielsweise die Begrenzung eines Linsenhalters sein könnte.

Der Begriff "Fahrbahn" wird hier zur vereinfachten Darstellung verwendet, denn selbstverständlich hängt es von den örtlichen Gegebenheiten ab, ob sich das Leuchtbild 11' tatsächlich auf der Fahrbahn befindet oder auch darüber hinaus erstreckt. Prinzipiell entspricht das Bild 11' einer Projektion auf eine vertikale Fläche entsprechend der einschlägigen Normen, die sich auf die KFZ-Beleuchtungstechnik beziehen.

Wie bereits eingangs erwähnt, ergibt sich auf Grund unvollkommener Projektionssysteme ein Helligkeitsabfall in dem projizierten Bild, ein Übel, das allen optischen Systemen zu eigen ist und in der Photographie wohl bekannt ist.

Um dem eingangs erläuterten Problem des Randlichtabfalls erfolgreich entgegen zu wirken, ist nun vorgesehen, zur Korrektur des Randlichtabfalls zusätzlich zu der oben besprochenen Lichtverteilung die Intensität des Laserstrahls 2 nach einer vorgegebenen Funktion im Sinne einer Erhöhung der Intensität in Richtung der Ränder des auf dem Lichtkonversionsmittel 8 erzeugten Leuchtbildes 11 zu ändern.

Das $\cos^4(\alpha)$-Gesetz beschreibt den bereits eingangs erwähnten, sogenannten "natürlichen Randlichtabfall", wonach die Bildhelligkeit zum Rand hin um einen Faktor $\cos^4(\alpha)$ dunkler wird ($\alpha$ ist der Winkel zur optischen Achse). Demnach beträgt die Bildhelligkeit $I(\alpha)$ in einem Winkel $\alpha$ außerhalb der Bildmitte

$$I(\alpha) = I_0.\cos^4(\alpha),$$

wobei $I_0$ die Helligkeit in der Bildmitte ist.

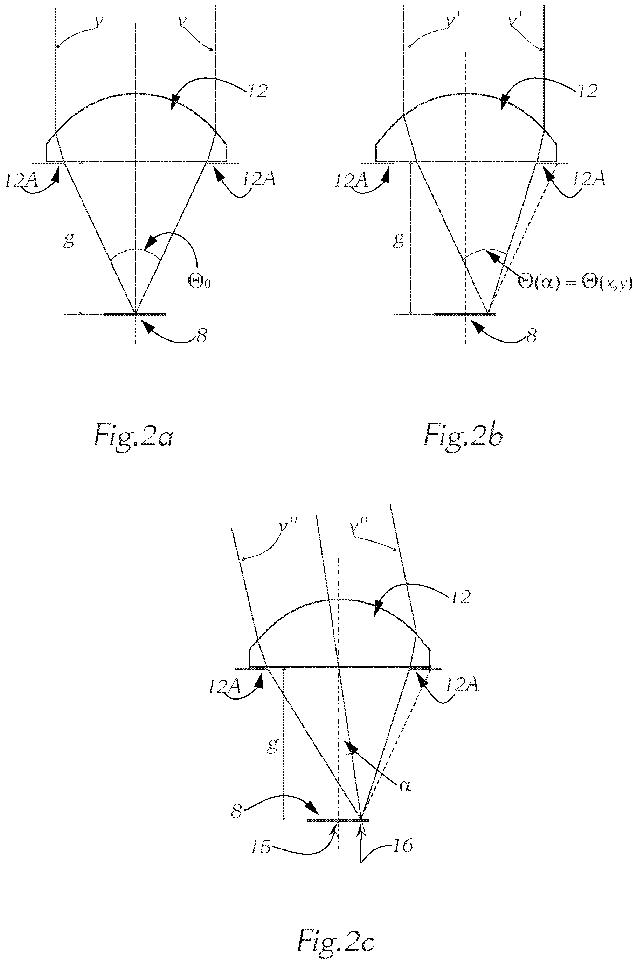

In den Fig. 2a, 2b und 2c ist die geometrische Situation, die zur Vignettierung führt, vereinfacht dargestellt, wobei mit dem Bezugszeichen 8 das Lichtkonversionsmittel bezeichnet ist, mit 12 die Linse, welche die Projektionsoptik repräsentiert, wobei $\theta_0$ der maximale Öffnungswinkel des Strahlenbündels, das durch die Eintrittspupille der Abbildungslinse tritt, ist. Er beschreibt das akzeptierte Strahlenbündel aus einem Gegenstandspunkt abseits der optischen Achse. Einem derartigen Strahlenbündel ist ein Öffnungswinkel $\theta(\alpha)$ zugeordnet, der von dem Auslenkwinkel $\alpha$ abhängt.

Die Strahlen v repräsentieren die gerade nicht mehr vignettierten Randstrahlen im Zentrum; dadurch ist durch den Öffnungswinkel $\theta_0$ eine maximal nutzbare Numerische Apertur festgelegt. Trifft nun der Laserstrahl in einem abseits der optischen Achse gelegenen Punkt 16 auf Strahlenbündel, wird durch die beschränkende, d.h. vignettierende Blende12A ein anderes Strahlenbündel $\theta(x,y)$ durch das Projektionssystem, z.B. eine Linse hindurch, auf die Straße projiziert. Zur Hervorhebung der Unterscheidung dieses unterschiedlichen Strahlenbündel wurden die dem Punkt 16 zugeordneten Randstrahlen mit v' bezeichnet. Durch die Randstrahlen v' wird der nutzbare Lichtstrom vermindert, dies wird durch die gegenständliche Korrektur ausgeglichen.

Jedes vignettierte Strahlenbündel, ausgehend von einem Auslenkungspunkt $(x, y)$ auf dem Phosphor des Lichtkonversionsmittels 8, weist in x- und y-Richtung auf der Eintrittsapertur der Abbildungslinse 12 unterschiedlich große Strahlenbündelbreiten auf. Über die bekannte Schnittweite der Abbildungslinse werden die zugeordneten Winkel entlang dieser orthogonalen Richtungen berechnet; der Öffnungswinkels $\theta(\alpha) = \theta(x,y)$ kann in einer ersten Näherung als arithmetisches Mittel dieser zwei Winkelgrößen dargestellt werden. Eine solche Mittelung wird z.B. bei der Laserklassifizierung von elliptischen Laserspots angewendet.

Bei der Vignettierung kommt es zur Abschattung von Strahlen, die aus dem Randbereich des Leuchtbildes des Lichtkonversionsmittels kommen, wodurch die Bildhelligkeit am Rand geringer ist als in der Mitte. Wie groß der Helligkeitsverlust ist, hängt von den verwendeten Geometrien und vor allem auch von der Abstrahlcharakteristik des Lichtkonversionsmittels ab.

Um den Randlichtabfall auf Grund der Vignettierung zu kompensieren, wird beispielsweise ein Korrekturfaktor $\varepsilon$ verwendet:

$$\varepsilon(x,y) = \Phi_{max} / \Phi(x,y) = (\,I\,\pi\,n^2\,\sin^2(x,y)\,) / (\,I\,\pi\,n^2\,\sin^2(\theta(\alpha))\,) = (\,\sin^2(\theta_0)\,) / (\,\sin^2(\theta(x,y))\,)$$

wobei I die Lichtstärke im Punkt $(x,y)$, und n der Brechungsindex des Ausbreitungsmediums bedeuten.

In Fig. 2c ist der Effekt des $\cos^4(\alpha)$-Gesetz vereinfacht dargestellt. Das Gesetz beschreibt die Abschwächung zum Bildfeldrand hin, verursacht durch die perspektivische Verzerrung der Eintrittspupille und ist dem Fachmann hinlänglich bekannt. Die Auswirkungen dieses Effektes auf das projizierte Lichtbild werden durch die gegenständliche Korrektur ausgeglichen. Zur Kompensation des natürlichen Randlichtabfalls kann ein Korrekturfaktor $\delta$ verwendet werden, wobei die Intensität des Laserstrahls, mit dem Kehrwert eines Korrekturfaktors $\delta(x, y)$ multipliziert wird, wobei

$$\delta(x, y) = \cos^4(\alpha) = \left(\frac{g^2}{x^2 + y^2 + g^2}\right)^2,$$ mit $x(t) = A.\sin(\omega_x t)$ und $y(t) = B.\sin(\omega_y t)$, g optischer Abstand zwischen Phosphor und Projektionsoptik, A, B Amplituden der Spiegelschwingungen und $\omega_x$, $\omega_y$ deren Frequenzen in den Koordinatenrichtungen x, y. In der Praxis wird der Versorgungsstrom der Laserlichtquelle 1 mit den beiden Korrekturfaktoren $\varepsilon(x,y)$ und

$\delta$ (x,y) korrigiert, was zu demgemäß angepassten Korrekturfaktoren führt.

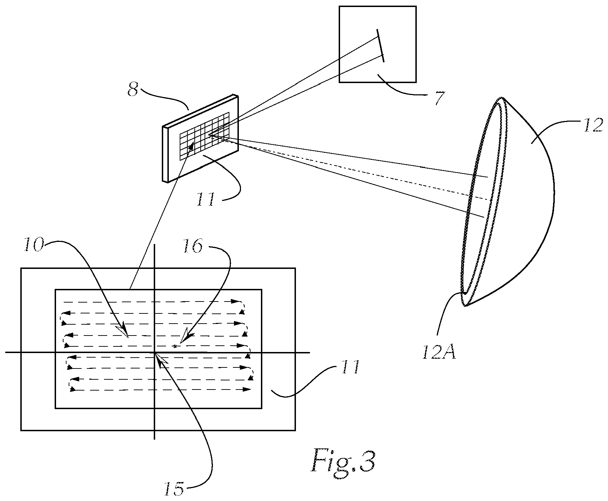

In Fig. 3 ist zur besseren Veranschaulichung ein beispielsweiser Abtastvorgang illustriert, wobei Ausgangspunkt die Darstellung nach Fig. 1 ist. Auf der vergrößert gezeigten Darstellung des Leuchtbildes 11 auf dem Phosphor des Lichtkonversionsmittels 8 erkennt man die zeilenweise Abtastung, wobei mit 15 der Ursprungspunkt bezüglich der Koordinaten x und y bezeichnet ist, nämlich der Schnittpunkt der optischen Achse des Projektionssystems 12 mit der Ebene des Lichtkonversionsmittels, auf welcher sich der Phosphor befindet, und mit 16 ein allgemeiner Punkt mit den Koordinaten (x, y), nämlich der jeweilige Auftreffpunkt des Laserstrahls, für welchen die Beziehung $\tan(\alpha) = \frac{\sqrt{x^2+y^2}}{g}$ gilt.

Wenn jede Laserdiode in der Laserlichtquelle einzeln ansteuerbar ist, kann man auch die unterschiedlichen zugeordneten Auftreffpunkte mit jeweils angepassten Korrekturfaktoren modulieren. Im Allgemeinen wird die Intensität des Laserstrahls durch die Modulation des Ansteuerungsstrom $I_s$ variiert, indem der Ansteuerungsstrom mit den ortskorrelierten Korrekturfaktoren multipliziert wird.

Wie oben angesprochen, ist es für die Kompensation des Randlichtabfalls von eher untergeordneter Bedeutung, welchen Ursprung dieser Lichtabfall hat. In der Praxis werden oft solche Korrekturwerte y empirisch ermittelt, die Zusammenhänge in Tabellen abgespeichert und diese Werte in einem Speicher 14 der Recheneinheit zur Verfügung gestellt, der nebst anderen Informationen diese Korrekturwerte bzw. Korrekturtabellen zur Korrektur des Randlichtabfalls enthalten kann.

Die empirisch ermittelten Auswirkungen der realen Abstrahlcharakteristik des Phosphors, beispielsweise auf Grund der gewählten Geometrie des Phosphors, von Dichteschwankungen in der Dotierung könnten gleichfalls durch entsprechende Korrekturwerte berücksichtigt werden.

Bei einer anderen Ausführungsvariante ist das Gesamtsystem in zwei gleich aufgebaute Laserstrahlerzeugungseinheiten aufgeteilt und es sind zwei Mikrospiegel vorgesehen, die je in zwei Koordinatenrichtungen schwingen. Die eine Lasereinheit ist z.B. oberhalb, die zweite Lasereinheit unterhalb der optischen Achse der Abbildungslinse positioniert. Aufgrund dieser spiegelbildlichen Anordnung ist die Abstimmung der jeweiligen Spiegelansteuerung vereinfacht, weil nur der Vorzeichenwechsel berücksichtigen werden muss, wobei eine solche Ausführung die Laserleistung auf dem Phosphor erhöht.

Wenngleich bevorzugte Ausführungsbeispiele Mikrospiegel zeigen, die um zwei Achsen schwingen, ist es auch möglich, zwei Mikrospiegel zu verwenden, von welcher einer um eine Achse A und der andere um eine Achse B schwingt. Dem ersten Mikrospiegel sei eine Laserlichtquelle zugeordnet und erzeugt ein eindimensional scanbares Lichtbildmuster, beispielhaft ein horizontal verlaufendes Zeilenbild. Der zweite Mikrospiegel schwingt um eine Achse B, die orthogonal zur Achse A ausgerichtet ist, und verschiebt die vom ersten Spiegel erzeugte Linie rechtwinkelig zur Ausdehnung dieser Linie, sodass ein vollständiges zweidimensional veränderbares Lichtbild auf dem Lichtkonversionsmittel entsteht. Dies kann einen Vorteil hinsichtlich der Leistungsaufteilung auf zwei Mikrospiegel bringen, allerdings können sich hier Probleme beim Justieren der beiden Halbsysteme ergeben. In diesem Fall können mehrere versetzt-justierte Laserstrahlen auf einen solchen Mikrospiegel gerichtet sein, welcher dann überlappende oder direkt aneinander anliegende Lichtbänder erzeugt. Auch sind Ausführungen mit lediglich einem einzigen Mikrospiegel denkbar, bei welchen beispielsweise die Laserstrahlen entgegen der Hauptabstrahlrichtung des Scheinwerfers direkt auf den Mikrospiegel auftreffen, der dann die Laserstrahlen auf einen durchleuchteten Phosphor lenkt. Die Aufteilung auf zwei Gruppen von Laserlichtquellen und die Verwendung von zwei Mikrospiegeln bringt allerdings Vorteile hinsichtlich eines kompakten Aufbaus und einer gut beherrschbaren Wärmeabfuhr, zumal die mögliche thermische Belastung eines Mikrospiegels begrenzt ist.

**Patentansprüche**

1. Verfahren zum Erzeugen einer Lichtverteilung auf einer Fahrbahn (13) mit Hilfe eines KFZ-Scheinwerfers, bei welchem zumindest ein in seiner Intensität modulierbarer Laserstrahl (2) mit Hilfe zumindest eines angesteuerten Strahlablenkmittels (7) in zumindest einer Koordinatenrichtung scannend auf ein Lichtkonversionsmittel (8) gelenkt wird, um an diesem ein Leuchtbild (11) mit beliebigen, auch rasch änderbaren Lichtverteilungen zu erzeugen, das mit Hilfe einer Projektionsoptik (12) auf die Fahrbahn projiziert wird,
**dadurch gekennzeichnet, dass**
zur Korrektur des Randlichtabfalls die Intensität des zumindest einen Laserstrahls (2) nach einer vorgegebenen Funktion im Sinne einer Erhöhung der Intensität in Richtung der Ränder des auf dem Lichtkonversionsmittel (8) erzeugten Leuchtbildes (11) geändert wird.

2. Verfahren nach Anspruch 1, **dadurch gekennzeichnet, dass** die Intensität des zumindest einen Laserstrahls (2) mit koordinatenabhängigen Korrekturfaktoren ($\delta$, $\varepsilon$, $\nu$) multipliziert wird.

3. Verfahren nach Anspruch 2, **dadurch gekennzeichnet, dass** zur Korrektur des Randlichtabfalls gemäß dem $\cos^4\alpha$-Gesetz die Intensität des zumindest einen Laserstrahls mit dem Kehrwert eines Korrekturfaktors $\delta(x, y)$ multipliziert wird, wobei $\delta(x, y) = \cos^4(\alpha) = \left(\dfrac{g^2}{x^2 + y^2 + g^2}\right)^2$, mit $x(t) = A.\sin(\omega_x t)$ und $y(t) = B.\sin(\omega_y t)$, g optischer Abstand zwischen Phosphor und Projektionsoptik, A, B Amplituden der Spiegelschwingungen und $\omega_x$, $\omega_y$ deren Frequenzen in den Koordinatenrichtungen x, y.

4. Verfahren nach Anspruch 2, **dadurch gekennzeichnet, dass** zur Korrektur des Randlichtabfalls auf Grund der Vignettierung ein Korrekturfaktor $\varepsilon(x,y) = \sin^2(\theta_0/2)/\sin^2(\theta(x,y)/2)$ verwendet wird, mit Punktkoordinaten (x,y) in Relation zur optischen Achse.

5. Verfahren nach einem der Ansprüche 1 bis 4, **dadurch gekennzeichnet, dass** die Intensitätsänderung zur Korrektur des Randlichtabfalls zumindest in horizontaler Richtung x durchgeführt wird.

6. Verfahren nach einem der Ansprüche 1 bis 5, **dadurch gekennzeichnet, dass** das Strahlablenkmittel zumindest einen, um zumindest ein Achse verschwenkbaren Mikrospiegel (7) aufweist und eine den zumindest einen Lichtstrahl (2) erzeugende Laserlichtquelle (1) in Abhängigkeit von der Winkellage des zumindest einen Mikrospiegels moduliert wird.

7. Verfahren nach Anspruch 6, **dadurch gekennzeichnet, dass** der Mikrospiegel (7) mit einer Frequenz entsprechend einer mechanischen Eigenfrequenz in der jeweiligen Koordinatenrichtung angesteuert wird.

8. Scheinwerfer für Kraftfahrzeuge mit zumindest einer, mittels einer Ansteuerung (3) und einer Recheneinheit (4) modulierbaren Laserlichtquelle (1), deren Laserstrahl (2) über ein von einer Strahlablenkansteuerung (9) angesteuertes Strahlablenkmittel (7) auf zumindest ein Lichtkonversionsmittel (8) gelenkt wird, welche eine Phosphor zur Lichtkonversion aufweist, und mit einem Projektionssystem (12) zur Projektion des an dem zumindest einem Lichtkonversionsmittel mit beliebigen, auch rasch änderbaren Lichtverteilungen erzeugten Leuchtbildes (11) auf die Fahrbahn (13),
**dadurch gekennzeichnet, dass**
die Recheneinheit (4) dazu eingerichtet ist, zusätzlich zu einer vorgegebenen Lichtverteilung über die Ansteuerung (3) die Intensität des Strahls (2) der Laserlichtquelle (1) nach einer vorgegebenen Funktion im Sinne einer Erhöhung der Intensität in Richtung der Ränder des auf dem Lichtkonversionsmittel (8) erzeugten Leuchtbildes (11) zu ändern.

9. Scheinwerfer nach Anspruch 8, **dadurch gekennzeichnet, dass** die Recheneinheit (4) über die Ansteuerung (3) zur Multiplikation des Ansteuerstroms ($I_s$) und damit der Laserstrahlintensität mit koordinatenabhängigen Korrekturfaktoren ($\delta$, $\varepsilon$, $\nu$) eingerichtet ist.

10. Scheinwerfer nach Anspruch 8 oder 9, **dadurch gekennzeichnet, dass zur** Korrektur des Randlichtabfalls gemäß dem $\cos^4\alpha$-Gesetz die Recheneinheit dazu eingerichtet ist, die Intensität des zumindest einen Laserstrahls mit dem Kehrwert eines Korrekturfaktors $\delta(x,y)$ zu multiplizieren, wobei $\delta(x, y) = \cos^4(\alpha) = \left(\dfrac{g^2}{x^2 + y^2 + g^2}\right)^2$, mit $x(t) = A.\sin(\omega_x t)$ und $y(t) = B.\sin(\omega_y t)$, g optischer Abstand zwischen Phosphor und Projektionsoptik, A, B Amplituden der Spiegelschwingungen und $\omega_x$, $\omega_y$ deren Frequenzen in den Koordinatenrichtungen x, y.

11. Scheinwerfer nach Anspruch 8 oder 9, **dadurch gekennzeichnet, dass** zur Korrektur des Randlichtabfalls auf Grund der Vignettierung die Recheneinheit dazu eingerichtet ist, die Intensität des zumindest einen Laserstrahls mit einem Korrekturfaktor $\varepsilon(x,y) = \sin^2(\theta_0/2)/\sin^2(\theta(x,y)/2)$ zu multiplizieren, mit Punktkoordinaten (x,y) in Relation zur optischen Achse.

12. Scheinwerfer nach einem der Ansprüche 8 bis 11, **dadurch gekennzeichnet, dass** das Strahlablenkmittel zumindest einen, um eine Achse verschwenkbaren Mikrospiegel (7) aufweist, der Recheneinheit (4) ein Positionssignal ($p_r$) betreffend die Winkellage des Spiegels zugeführt ist um die den zumindest einen Lichtstrahl (2) erzeugende Laserlichtquelle (1) in Abhängigkeit von der Winkellage des zumindest einen Mikrospiegels zu modulieren.

13. Scheinwerfer nach Anspruch 12, **dadurch gekennzeichnet, dass** die Strahlablenkansteuerung (9) zur Abgabe zumindest eines Treibersignals ($a_x$, $a_y$) an den zumindest einen Mikrospiegel (7) ausgebildet ist, dessen Frequenz der mechanischen Eigenfrequenz des Mikrospiegels in der entsprechenden Koordinatenrichtung entspricht.

**Claims**

1. A method for generating a light distribution on a roadway (13) with the aid of a motor vehicle headlight, in which at least one laser beam (2) of which the intensity can be modulated is directed with the aid of at least one actuated beam deflection means (7) onto a light conversion means (8) in a manner scanning in at least one coordinate direction so as to generate at said light conversion means a light image (11) which has any light distributions, even those that can be changed quickly, and which is projected with the aid of a projection optics (12) onto the roadway, **characterised in that** in order to correct the illumination falloff in the image periphery, the intensity of the at least one laser beam (2) is changed according to a specified function in the sense of increasing the intensity in the direction of the edges of the light image (11) generated on the light conversion means (8).

2. The method according to claim 1, **characterised in that** the intensity of the at least one laser beam (2) is multiplied by coordinate-dependent correction factors ($\delta$, $\varepsilon$, $\nu$).

3. The method according to claim 2, **characterised in that** in order to correct the illumination falloff according to the $\cos^4\alpha$ law, the intensity of the at least one laser beam is multiplied by the reciprocal of a correction factor $\delta(x, y)$, wherein $\delta(x, y) = \cos^4(\alpha) = \left(\dfrac{g^2}{x^2 + y^2 + g^2}\right)^2$, with $x(t) = A.\sin(\omega_x t)$ and $y(t) = B.\sin(\omega_y t)$, g is optical distance between phosphor and projection optics, A, B are amplitudes of the mirror vibrations, and $\omega_x$, $\omega_y$ are the frequencies thereof in the coordinate directions x, y.

4. The method according to claim 2, **characterised in that** in order to correct the illumination falloff in the image periphery on account of the vignetting, a correction factor $\varepsilon(x,y) = \sin^2(\theta_0/2)/\sin^2(\theta(x,y)/2)$ is used, with point coordinates (x,y) in relation to the optical axis.

5. The method according to any one of claims 1 to 4, **characterised in that** the change in intensity for correction of the illumination falloff in the image periphery is performed at least in the horizontal direction x.

6. The method according to any one of claims 1 to 5, **characterised in** the beam deflection means has at least one micromirror (7), which can be pivoted about at least one axis, and a laser light source (1), which generates at least one light beam (2) depending on the angular position of the at least one micromirror.

7. The method according to claim 6, **characterised in that** the micromirror (7) Is actuated with a frequency corresponding to a mechanical inherent frequency in the corresponding coordinate direction.

8. A headlight for motor vehicles, having at least one laser light source (1) which can be modulated by means of an actuator (3) and a processing unit (4) and of which the laser beam (2) is directed onto at least one light conversion means (8) via a beam deflection means (7) actuated by a beam deflection actuator (9), said light conversion means having a phosphor for converting light, and said headlight also comprising a projection system (12) for projecting the light image (11) generated at the at least one light conversion means and having any light distributions, even those that can be changed quickly, onto the roadway (13), **characterised in that** in addition to changing a specified light distribution, the processing unit (4) is configured to change the intensity of the beam (2) of the laser light source (1) by means of the actuator (3) according to a specified function in the sense of increasing the intensity in the direction of the edges of the light image (11) generated on the light conversion means (8).

9. The headlight according to claim 8, **characterised in that** the processing unit (4) is configured by the actuator (3) for multiplication of the actuation current ($I_s$) and therefore the laser beam intensity by coordinate-dependent correction factors ($\delta$, $\varepsilon$, $\nu$).

10. The headlight according to claim 8 or 9, **characterised in that** for correction of the illumination falloff in the image periphery according to the $\cos^4\alpha$ law, the processing unit (4) is configured to multiply the intensity of the at least one laser beam by the reciprocal of a correction factor δ(x, y), wherein $\delta(x, y) = \cos^4(\alpha) = \left(\frac{g^2}{x^2 + y^2 + g^2}\right)^2$, with x(t) = A.sin($\omega_x$t) and y(t) = B.sin($\omega_y$t), g is optical distance between phosphor and projection optics, A, B are amplitudes of the mirror vibrations, and $\omega_x$, $\omega_y$ are the frequencies thereof in the coordinate directions x.

11. The headlight according to claim 8 or 9, **characterised in that** for correction of the illumination falloff in the image periphery on account of the vignetting, the processing unit is configured to multiply the intensity of the at least one laser beam by a correction factor ε(x,y) = $\sin^2(\theta_0/2)/\sin^2(\theta(x,y)/2)$ with point coordinates (x,y) in relation to the optical axis.

12. The headlight according to any one of claims 8 to 11, **characterised in that** the beam deflection means has at least one micromirror (7), which can be pivoted about an axis, and a position signal ($p_r$) relating to the angular position of the mirror is fed to the processing unit (4) in order to modulate the laser light source (1), which generates the at least one light beam (2), depending on the angular position of the at least one micromirror.

13. The headlight according to claim 12, **characterised in that** the beam deflection actuator (9) is designed to output at least one driver signal ($a_x$, $a_y$) to the at least one micromirror (7), of which the frequency corresponds to the mechanical inherent frequency of the micromirror in the corresponding coordinate direction.

**Revendications**

1. Procédé de production d'une répartition de la lumière sur une chaussée (13) à l'aide d'un phare pour véhicule automobile, suivant lequel au moins un faisceau laser (2) modulable en son intensité est dirigé, en balayant dans au moins une direction de coordonnées à l'aide d'au moins un moyen de déviation de faisceau (7) commandé, sur un moyen de conversion de lumière (8) afin de produire sur celui-ci une image lumineuse (11) ayant des répartitions de lumière quelconques, également rapidement modifiables, laquelle est projetée sur la chaussée à l'aide d'une optique de projection (12),
   **caractérisé par le fait que**
   pour la correction de la chute de lumière sur les bords, l'intensité de l'au moins un faisceau laser (2) est modifiée selon une fonction prédéfinie dans le sens d'une augmentation de l'intensité en direction des bords de l'image lumineuse (11) produite sur le moyen de conversion de lumière (8).

2. Procédé selon la revendication 1, **caractérisé par le fait que** l'intensité de l'au moins un faisceau lumineux (2) est multipliée par des facteurs de correction (δ, ε, ν) dépendant des coordonnées.

3. Procédé selon la revendication 2, **caractérisé par le fait que,** pour la correction de la chute de lumière sur les bords selon la loi $\cos^4\alpha$, l'intensité de l'au moins un faisceau laser est multipliée par l'inverse d'un facteur de correction δ (x, y), où δ (x, y) = $\cos^4(\alpha)$ - $(g^2/x^2+y^2+g^2)^2$, avec x(t) = A•sin($\omega_x$t) et y(t) = B•sin ($\omega_y$t), est la distance optique entre luminophore et optique de projection, A, B sont les amplitudes des oscillations de miroir et $\omega_x$, $\omega_y$ sont leurs fréquences dans les directions de coordonnées x, y.

4. Procédé selon la revendication 2, **caractérisé par le fait que,** pour la correction de la chute de lumière sur les bords en raison du vignettage, un facteur de correction ε (x, y) = $\sin^2(\theta_0/2)/\sin^2(\theta(x, y)/2)$ est utilisé, avec des coordonnées ponctuelles (x, y) par rapport à l'axe optique.

5. Procédé selon l'une des revendications 1 à 4,
   **caractérisé par le fait que** la modification d'intensité pour la correction de la chute de lumière sur les bords est réalisée au moins en direction horizontale x.

6. Procédé selon l'une des revendications 1 à 5,
   **caractérisé par le fait que** le moyen de déviation de faisceau présente au moins un micro-miroir (7) pivotant autour d'au moins un axe et une source de lumière laser (1) produisant l'au moins un faisceau lumineux (2) est modulée en fonction de la position angulaire de l'au moins un micro-miroir.

7. Procédé selon la revendication 6, **caractérisé par le fait que** le micro-miroir (7) est commandé dans la direction de coordonnées respective avec une fréquence correspondant à une fréquence propre mécanique.

**8.** Phare pour véhicule automobile comportant au moins une source de lumière laser (1) modulable au moyen d'une commande (3) et d'une unité de calcul (4), dont le faisceau laser (2) est dirigé par l'intermédiaire d'un moyen de déviation de faisceau (7) commandé par une commande de déviation de faisceau (9), sur au moins un moyen de conversion de lumière (8) qui présente un luminophore pour la conversion de lumière, et comportant un système de projection (12) pour la projection de l'image lumineuse (11) générée sur l'au moins un moyen de conversion de lumière avec des répartitions de lumière quelconques, également rapidement modifiables sur la chaussée (13), **caractérisé par le fait que**
l'unité de calcul (4) est conçue pour modifier, en plus d'une répartition de la lumière prédéfinie par l'intermédiaire de la commande (3), l'intensité du faisceau (2) de la source de lumière laser (1) selon une fonction prédéfinie dans le sens d'une augmentation de l'intensité en direction des bords de l'image lumineuse (11) produite sur le moyen de conversion de lumière (8).

**9.** Phare selon la revendication 8, **caractérisé par le fait que** l'unité de calcul (4) est conçue, par l'intermédiaire de la commande (3), pour la multiplication du courant de commande ($I_s$) et ainsi de l'intensité de faisceau laser par des facteurs de correction ($\delta$, $\varepsilon$, $\nu$) dépendant des coordonnées.

**10.** Phare selon l'une des revendications 8 ou 9,
**caractérisé par le fait que,** pour la correction de la chute de lumière sur les bords selon la loi $\cos^4\alpha$, l'unité de calcul est conçue de façon à multiplier l'intensité de l'au moins un faisceau laser par l'inverse d'un facteur de correction $\delta$ (x, y), où $\delta$ (x, y) = $\cos^4(\alpha)$ = $(g^2/x^2+y^2+g^2)^2$, avec x(t) = A•sin($\omega_{xt}$) et y(t) = B•sin($\omega_{yt}$), g est la distance optique entre luminophore et optique de projection, A, B sont les amplitudes des oscillations de miroir et $\omega_x$, $\omega_y$ sont leurs fréquences dans les directions de coordonnées x, y.

**11.** Phare selon l'une des revendications 8 ou 9,
**caractérisé par le fait que,** pour la correction de la chute de lumière sur les bords en raison du vignettage, l'unité de calcul est conçue pour multiplier l'intensité de l'au moins un faisceau laser par un facteur de correction $\varepsilon$ (x, y) = $\sin^2(\theta_0/2)/\sin^2(\theta)$(x, y)/2), avec des coordonnées ponctuelles (x, y) par rapport à l'axe optique.

**12.** Phare selon l'une des revendications 8 à 11,
**caractérisé par le fait que** le moyen de déviation de faisceau présente au moins un micro-miroir (7) pivotant autour d'un axe, un signal de position ($p_r$) concernant la position angulaire du miroir est fourni à l'unité de calcul (4) afin de moduler la source de lumière laser (1) générant l'au moins un faisceau lumineux (2) en fonction de la position angulaire de l'au moins un micro-miroir.

**13.** Phare selon la revendication 12, **caractérisé par le fait que** la commande de déviation de faisceau (9) est conçue pour la distribution d'au moins un signal de commande ($a_x$, $a_y$) sur l' au moins un micro-miroir (7), dont la fréquence correspond à la fréquence propre mécanique du micro-miroir dans la direction de coordonnées correspondante.

Fig. 1

*Fig.2a*

*Fig.2b*

*Fig.2c*

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012100141 A1
- EP 2063170 A2
- DE 102009025678 A1
- AT 514633 A1